Europäisches Patentamt

European Patent Office

Office européen des brevets

(19)

(11) Veröffentlichungsnummer: **0 133 227**
**A1**

(12)

# EUROPÄISCHE PATENTANMELDUNG

(21) Anmeldenummer: 84108036.9

(51) Int. Cl.⁴: **G 01 N 27/07**

(22) Anmeldetag: 09.07.84

(30) Priorität: 22.07.83 DE 3326397

(43) Veröffentlichungstag der Anmeldung: 20.02.85
Patentblatt 85/8

(84) Benannte Vertragsstaaten: CH DE FR GB LI NL

(71) Anmelder: **Siemens Aktiengesellschaft, Berlin und München Wittelsbacherplatz 2, D-8000 München 2 (DE)**

(72) Erfinder: **Schmidt, Karl-Heinz, Dr., Plättigstrasse 4, D-7505 Ettlingen 5 (DE)**
Erfinder: **Seybicke, Günter, Danziger Strasse 5, D-7500 Karlsruhe (DE)**
Erfinder: **Thieme, Roland, Bismarckstrasse 1, D-6729 Wörth 2 (DE)**

(54) Messwertaufnehmer für Leittähigkeit von Elektrolyten.

(57) In die Mantelfläche eines zylindrischen Isolierkörpers (3) sind ringförmige Elektroden (4) eingelassen, die jeweils mit einem radial nach innen gerichteten Fortsatz (9) versehen sind, über den sie mit im Innern des Isolierkörpers (3) in Bohrungen (8) angebrachten Metallstäben (5) leitend verbunden sind. Die Metallstäbe (5) dienen als Elektrodenableitungen und sind an ihren oberen, aus dem Isolierkörper führenden Endabschnitten gegen die Innenflächen der Bohrungen (8) abgedichtet.

Die nach dem Streufeldprinzip arbeitenden Meßwertaufnehmer können dank der in weiten Grenzen frei wählbaren Werkstoffe für Isolierkörper und Elektroden nebst Ableitungen in einem breiten Anwendungsbereich zur Messung der Leitfähigkeit von Elektrolyten hoher Konzentration eingesetzt werden.

SIEMENS AKTIENGESELLSCHAFT
Berlin und München

Unser Zeichen
VPA 83 P 4429

0133227

## Meßwertaufnehmer für Leitfähigkeit von Elektrolyten

Die Erfindung bezieht sich auf einen Meßwertaufnehmer für die Leitfähigkeit von Elektrolyten mit mindestens zwei ringförmigen, in der Mantelfläche eines zylindrischen Isolierkörpers angeordneten Elektroden und mit aus dem Isolierkörper nach außen führenden Elektrodenableitungen.

Bei bekannten Meßwertaufnehmern dieser Art sind die ringförmigen Elektroden aus einem leitenden Werkstoff mit Rohrabschnitten aus Isolierstoff druckdicht verklebt oder verschweißt.
Beim Einsatz in einem größeren Temperatur- und Druckbereich des Meßguts können jedoch infolge unterschiedlicher thermischer Ausdehnungskoeffizienten der Werkstoffe Rißbildungen und damit Undichtigkeiten auftreten.
Um dem zu begegnen, wurden Meßwertaufnehmer entwickelt, deren rohr- oder stabförmiger Trägerkörper aus einem einheitlichen, abschnittsweise leitenden oder nichtleitenden Füllstoff enthaltenden Kunststoff besteht, wobei Art und Anteil der Füllstoffe in dem Kunststoffmaterial so gewählt sind, daß die thermischen Ausdehnungskoeffizienten von dessen elektrisch leitenden und nichtleitenden Teilen etwa gleiche Werte aufweisen (DE-PS 23 39 481).
Diese Meßwertaufnehmer sind herstellungsmäßig relativ aufwendig und an bestimmte Werkstoffkombinationen gebunden.

Es besteht demgemäß die Aufgabe, einen Meßwertaufnehmer der eingangs genannten Art zu schaffen, der einfach herzustellen und in einem großen Temperatur- und Druckbereich einsetzbar ist.

Sp 4 Scl / 15.07.1983

0133227

Eine Lösung der Aufgabe ist mit einem Meßwertaufnehmer gegeben, der die im Anspruch 1 aufgeführten Merkmale aufweist.

Die Werkstoffe für die ringförmigen Elektroden wie auch für den Isolierkörper sind je nach Betriebsbedingungen und der Art des Meßstoffs in weiten Grenzen frei wählbar. Da die Abdichtung der Elektrodenableitungen gegenüber dem Isolierkörper erst oberhalb des Meßstoffniveaus erfolgt, treten Druck- und Dichtigkeitsprobleme im Isolierkörper nicht auf, zumal dieser vorzugsweise als einstückiges Gebilde ausgeführt ist. Der Einsatz der Meßwertaufnehmer kann bei Betriebstemperaturen in der Größenordnung von 100 °C und Betriebsdrücken in der Größenordnung von 10 bar erfolgen.

Zur Erläuterung der Erfindung sind in den Figuren 1 bis 4 ein Ausführungsbeispiel dargestellt und im folgenden beschrieben.

Figur 1 zeigt einen Längsschnitt durch einen 4-Ring-Eintauchgeber,
Figur 2 einen Querschnitt.
In den Figuren 3 und 4 sind Einzelheiten der Befestigungsmöglichkeiten von Elektroden und Elektrodenableitungen dargestellt.

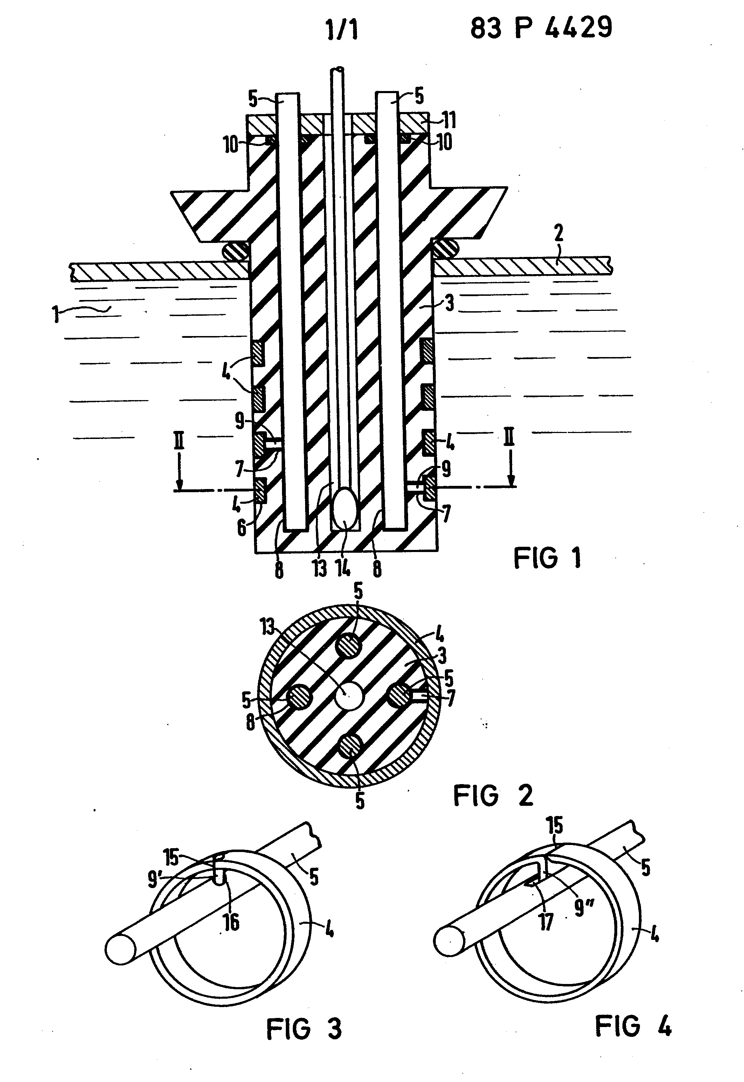

Der in Figur 1 im Längsschnitt dargestellte Meßwertaufnehmer ist in einer Öffnung in der Wand 2 eines Behälters montiert und taucht mit seinem aktiven Teil in die Meßflüssigkeit 1.
Der nach dem Streufeldprinzip arbeitende Meßwertaufnehmer besteht aus einem zylindrischen Isolierkörper 3 und vier ringförmigen, in seiner Mantelfläche angeordneten Elektroden 4 sowie Metallstäben 5 als Elektrodenableitungen.
Der Isolierkörper 3 ist auf seiner Mantelfläche mit Anzahl und Form der Elektroden 4 entsprechenden, in Radialebenen verlaufenden Nuten 6 versehen.

C133227

Vom Grund jeder Nut mit an die Form der Elektroden angepaßtem rechteckigen Querschnitt führt eine Bohrung 7 radial nach innen und mündet dort in je eine zur Mittelachse des Isolierkörpers 3 parallele Bohrung 8, die jeweils einen der Metallstäbe 5 der Elektrodenableitungen enthält.

Die ringförmigen Elektroden 4 sind jeweils mit einem sich radial nach innen erstreckenden Fortsatz 9 versehen, der jeweils mit einem der Metallstäbe 5, beispielsweise durch Schweißen, elektrisch leitend verbunden ist.

Im oberen, sich außerhalb der Meßflüssigkeit 1 befindenden Teil des Isolierkörpers 3 sind unterhalb eines Deckels 11 O-Ringe 10 vorgesehen, die die oberen Enden der Metallstäbe 5 gegen den Isolierkörper 3 bzw. gegen die Innenflächen der Bohrungen 8 in dem Isolierkörper 3 abdichten.

In einer zentrischen Aufnahme 13, die mit den Bohrungen 8 nicht in Verbindung steht, kann ein Temperaturfühler 14 zur Temperaturkompensation angeordnet werden.

Figur 2 zeigt einen Querschnitt durch den 4-Ring-Meßwertaufnehmer auf der Höhe der unteren Elektrode 4. Man erkennt die vier symmetrisch angeordneten achsparallelen Bohrungen 8 im Isolierkörper 3 sowie die darin befindlichen Metallstäbe 5 und den Fortsatz 7 der geschnittenen Elektrode 4 zur Verbindung mit dem zugeordneten Metallstab 5. Die anderen Metallstäbe sind, wie auch aus Figur 1 zu erkennen ist, in verschiedenen Höhen und gegeneinander versetzt mit den entsprechenden ringförmigen Elektroden verbunden.

In Figur 3 ist eine ringförmige Elektrode 4 mit rechteckigem Querschnitt dargestellt, die eine schlitzförmige Trennstelle 15 aufweist, so daß sie in die entsprechende Nut 6 des einstückig ausgebildeten Isolierkörpers 3 eingerastet werden kann. Der nach innen gerichtete Fortsatz 9 der Elektrode 4 ist hier ein Stift 9´, der in eine Bohrung an der Trennstelle 15 eingefügt ist und, wie in der Figur angedeutet, in eingebautem Zustand in eine Bohrung 16 im Metallstab 5 im Innern des Isolierkörpers 3 eingreift und auf einfache Weise verschweißt werden kann.

Bei einer anderen bevorzugten Ausführungsform der ringförmigen Elektrode 4 ist gemäß Figur 4 der nach innen gerichtete Fortsatz 9 durch ein an der Trennstelle 15 nach innen abgebogenes Ende 9" gebildet, welches in eine Längsnut 17 im Metallstab 5 eingreift und dort mit diesem verbunden werden kann.

5 Patentansprüche
4 Figuren

Patentansprüche

1. Meßwertaufnehmer für die Leitfähigkeit von Elektrolyten mit mindestens zwei ringförmigen, in der Mantelfläche eines zylindrischen Isolierkörpers angeordneten Elektroden und mit aus dem Isolierkörper nach außen führenden Elektrodenableitungen, d a d u r c h   g e k e n n z e i c h n e t , daß

- der zylindrische Isolierkörper auf seiner Mantelfläche mit Anzahl und Form der ringförmigen Elektroden (4) entsprechenden, in Radialebenen verlaufenden Nuten (6) versehen ist,

- die Elektrodenableitungen Metallstäbe (5) sind, die in Bohrungen (8) parallel zur Mittelachse des Isolierkörpers (3) in diesem angeordnet und an ihren oberen, aus dem Isolierkörper (3) führenden Enden gegen diesen abgedichtet sind,

- jede ringförmige Elektrode (4) einen sich radial nach innen erstreckenden Fortsatz (9) aufweist, der über eine Bohrung (7) am Grund jeder Nut (6) mit je einem Metallstab (5) elektrisch leitend verbunden ist.

2. Meßwertaufnehmer nach Anspruch 1, d a d u r c h   g e k e n n z e i c h n e t ,   daß die ringförmigen Elektroden (4) rechteckigen Querschnitt und eine schlitzförmige Trennstelle (15) aufweisen.

3. Meßwertaufnehmer nach Anspruch 1 oder 2, d a d u r c h   g e k e n n z e i c h n e t ,   daß der nach innen gerichtete Fortsatz (9) ein in eine Radialbohrung in der ringförmigen Elektrode (4) eingefügter Stift (9´) ist.

4. Meßwertaufnehmer nach Anspruch 1 oder 2, d a d u r c h   g e k e n n z e i c h n e t ,   daß der nach innen gerichtete Fortsatz (9) durch ein an der Trennstelle (15) abgebogenes Ende (9") der ringförmigen Elektrode (4) gebildet ist.

0133227

5. Meßwertaufnehmer nach Anspruch 1, d a d u r c h
g e k e n n z e i c h n e t , daß jeder Metallstab (5)
mit einer Bohrung (16) oder Längsnut (17) zur Aufnahme
des freien Endes des nach innen gerichteten Fortsatzes
(9, 9´, 9") versehen ist.

- 6 -        VPA 83 P 442

5. Meßwertaufnehmer nach Anspruch 1, d a d u r c h
g e k e n n z e i c h n e t , daß jeder Metallstab (5)

0133227

1/1          83 P 4429

FIG 1

FIG 2

FIG 3

FIG 4

Europäisches
Patentamt

EUROPÄISCHER RECHERCHENBERICHT  0133227

EP 84108036.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| D,X | DE - A1 - 2 339 481 (SIEMENS) | 1,2 | G 01 N 27/07 |
| A | * Fig. 1 * | 3-5 | |
| | --- | | |
| A | DE - A1 - 2 617 007 (M E MEERES-TECHNIK ELEKTRONIK) | 1 | |
| | * Ansprüche; Seiten 11-16, Zeile 12; Fig. 1,2,3 * | 1 | |
| | --- | | |
| A | DE - A1 - 2 533 943 (GEORGE KENT LTD) | 1 | |
| | * Ansprüche; Fig. 1 * | | |
| | ---- | | |

| | RECHERCHIERTE SACHGEBIETE (Int. Cl. 4) |
|---|---|
| | G 01 N 27/00 |
| | G 01 R 27/00 |

Der vorliegende Recherchenbericht wurde für alle Patentansprüche erstellt.

| Recherchenort | Abschlußdatum der Recherche | Prüfer |
|---|---|---|
| Wien | 05-10-1984 | KUNZE |